Europäisches Patentamt

European Patent Office

Office européen des brevets

(11) Veröffentlichungsnummer: **0 019 755**
**B1**

(12) **EUROPÄISCHE PATENTSCHRIFT**

(45) Veröffentlichungstag der Patentschrift :
26.01.83

(51) Int. Cl.³ : **H 04 B   3/23**

(21) Anmeldenummer : **80102470.4**

(22) Anmeldetag : **06.05.80**

(54) **Verfahren und Schaltungsanordnung zur Unterdrückung eines Übersprechsignals bei der Übertragung von Daten über eine Zweidrahtleitung.**

(30) Priorität : **29.05.79 DE 2921780**

(43) Veröffentlichungstag der Anmeldung :
**10.12.80 Patentblatt 80/25**

(45) Bekanntmachung des Hinweises auf die Patenterteilung : **26.01.83 Patentblatt 83/04**

(84) Benannte Vertragsstaaten :
**AT BE CH FR GB IT LI NL SE**

(56) Entgegenhaltungen :
**FR A 2 350 742**
**US A 1 815 657**

**SIEMENS ZEITSCHRIFT, Band 43, Beiheft Datenfernverarbeitung, 1969, Seiten 64-69 Erlangen, DE. REGER : « Übertragungseinheiten für Datennetze nach dem Telegrafieprinzip ».**

(73) Patentinhaber : **SIEMENS AKTIENGESELLSCHAFT**
**Berlin und München Wittelsbacherplatz 2**
**D-8000 München 2 (DE)**

(72) Erfinder : **Haass, Adolf, Ing. grad.**
**Eichelhäherstrasse 54**
**D-8000 München 60 (DE)**

# Verfahren und Schaltungsanordnung zur Unterdrückung eines Übersprechsignals bei der Übertragung von Daten über eine Zweidrahtleitung

Die Erfindung bezieht sich auf Verfahren und Schaltungsanordnungen zur Unterdrückung eines Übersprechsignals bei der Übertragung von Daten über eine Zweidrahtleitung von einer eigenen Station zu einer entfernten Station und umgekehrt, wobei die Daten der eigenen Station ein Übersprechsignal bewirken, das sich dem von der entfernten Station gesendeten Signal überlagert und im Empfangsteil auftritt, wobei im Bereich der eigenen Station ein Kompensationssignal erzeugt wird und wobei ein Differenzsignal gewonnen wird, das vom Empfangssignal, vom Übersprechsignal und vom Kompensationssignal abhängt.

Es ist bereits eine Schaltungsanordnung zum automatischen Abgleich eines Zweidraht-Vollduplex-Datenübertragungssystems bekannt (FR-A-2 350 742). Bei diesem bekannten Datenübertragungssystem sind ein Sender und ein Empfänger einer Station über zwei Leitungen mit einem weiteren Sender und einem weiteren Empfänger einer anderen Station verbunden. Der Sender gibt dabei Datensignale ab, welche über die Leitungen zum weiteren Empfänger der anderen Station übertragen werden. Außerdem ist ein automatisch abgleichbarer Nachbildungskreis vorgesehen, über den die Teilströme des Senders zum eigenen Empfänger fließen. Dabei wird eine Spannung erzeugt, welche der Differenz zweier Ströme proportional ist, von denen der eine vom Sender über den Nachbildungskreis zum eigenen Empfänger und der andere vom Sender über die Leitungen zum eigenen Empfänger fließt. Der in diesem Zusammenhang verwendete Nachbildungskreis weist zur Bildung der zuvor erwähnten Differenz unter anderem eine Subtrahierstufe auf, die mit ihrem Eingang direkt an der einen Leitung und mit ihrem anderen Eingang über zwei gesonderte Amplitudenstufen an der anderen Leitung der beiden vorgesehenen Leitungen angeschlossen ist. Mit ihrem Ausgang ist die betreffende Subtrahierstufe an den einen Eingängen zweier Multiplikationsstufen angeschlossen, die an ihren anderen Eingängen gesonderte Zeitsignale zugeführt erhalten und die ausgangsseitig die erwähnten Amplitudenstufen steuern. Aufgrund dieses Schaltungsaufbaus eignet sich die gerade betrachtete bekannte Schaltungsanordnung jedoch lediglich zur Unterdrückung eines Übersprechsignals bei der Übertragung von Daten im Basisband.

Der Erfindung liegt nun die Aufgabe zugrunde, einen Weg zu zeigen, wie eine Unterdrückung eines Übersprechsignals bei der Übertragung von Daten erfolgen kann, die mit einem modulierten Träger im Duplexbetrieb über eine Zweidrahtleitung übertragen werden, wobei in beiden Übertragungsrichtungen Träger im gleichen Frequenzband verwendet werden.

Die der Erfindung zugrundeliegende Aufgabe wird gemäß einer ersten Alternative dadurch gelöst, daß die Daten mit einem modulierten Träger übertragen werden, daß der modulierte Träger in zwei orthogonale Signalkomponenten zerlegt wird, deren Phasenwinkel sich um 90° unterscheiden, daß durch Korrelation des Differenzsignals mit den beiden orthogonalen Signalkomponenten ein erstes bzw. zweites Regelsignal erzeugt wird, welches die Abweichung der einen orthogonalen Signalkomponente von einer entsprechenden ersten Signalkomponente des Übersprechsignals bzw. die Abweichung der zweiten orthogonalen Signalkomponente von einer entsprechenden zweiten Signalkomponente des Übersprechsignals signalisiert, daß ein erstes bzw. zweites Nachbildungssignal erzeugt wird, das vom ersten bzw. zweiten Regelsignal und von den Daten abhängig ist, daß durch multiplikative Mischung des ersten Nachbildungssignals und der einen orthogonalen Signalkomponente bzw. durch multiplikative Mischung des zweiten Nachbildungssignals und der anderen orthogonalen Signalkomponente multiplikative Signale gewonnen werden, und daß das aus beiden multiplikativen Signalen gebildete Summensignal als Kompensationssignal zur Unterdrückung des Übersprechsignals benutzt wird.

Die der Erfindung zugrundeliegende Aufgabe wird gemäß einer zweiten Alternative dadurch gelöst, daß die Daten mit einem modulierten Träger übertragen werden, daß zwei vom modulierten Träger abhängige und zueinander orthogonale Signalkomponenten erzeugt werden, daß durch Korrelation des Differenzsignals mit den beiden orthogonalen Signalkomponenten ein dem Betrag zugeordnetes Betrags-Regelsignal bzw. ein der Phase zugeordnetes Phasen-Regelsignal erzeugt wird, das die Abweichung der einen orthogonalen Signalkomponente vom Betrag des Übersprechsignals bzw. die Abweichung der anderen orthogonalen Signalkomponente vom Phasenwinkel des Übersprechsignals signalisiert, daß mit dem Betrags-Regelsignal bzw. mit dem Phasenregelsignal und mit den Daten ein Betragsstellsignal bzw. ein Phasenstellsignal gewonnen wird, das den Betrag des Kompensationssignals bzw. die Phase des Kompensationssignals signalisiert, daß mit Hilfe des modulierten Trägers und mit Hilfe des Phasenstellsignals ein Phasensignal gewonnen wird, dessen Phase sowohl vom modulierten Träger als auch vom Phasenstellsignal abhängt und daß mit Hilfe des Phasensignals und mit Hilfe des Betragsstellsignals das Kompensationssignal erzeugt wird.

Beide Versionen der vorliegenden Erfindung zeichnen sich im Vergleich zu Vierdrahtausführungen durch Einsparung zweier Leitungen aus. Beide Versionen zeichnen sich im Vergleich zu bekannten Verfahren mit Zweidrahtbetrieb und verschiedenen Trägerfrequenzen für beide Richtungen durch geringeren Bandbreitenbedarf oder höhere Übertragungsrate aus.

Falls die Übertragungskapazität der Zweidrahtleitung besonders gut ausgenützt werden soll, kann zusätzlich zu den Daten ein Sprachsignal oder ein weiteres Basisbanddatensignal über die Zweidrahtleitung übertragen werden, wobei für das Sprachsignal bzw. für das weitere Basisbanddatensignal einerseits und für den modulierten Träger andererseits zwei sich nicht überlappende Frequenzbänder vorgesehen sind.

Um nur einen einzigen Phasenschieber zu benötigen, ist es zweckmäßig, daß die eine orthogonale Signalkomponente gleich dem modulierten Träger ist und die andere orthogonale Signalkomponente sich um einen Phasenwinkel von 90° vom modulierten Träger unterscheidet.

Um beide orthogonalen Signalkomponenten bei der Erzeugung der multiplikativen Signale zu berücksichtigen ist es zweckmäßig, daß zwei Multiplizierer vorgesehen sind, denen einerseits je eine der beiden orthogonalen Signalkomponenten zugeführt ist, denen andererseits das erste bzw. zweite Nachbildungssignal zugeführt ist und die über ihre Ausgänge die multiplikativen Signale abgeben.

Um jede beliebige Phase des Übersprechsignals nachbilden zu können, ist es zweckmäßig, daß eine Phasenregelstufe vorgesehen ist, welche die Phase des modulierten Trägers in Abhängigkeit vom Phasenstellsignal ändert und das Phasensignal abgibt.

Um jeden Betrag des Übersprechsignals nachbilden zu können, ist es zweckmäßig, daß ein zusätzlicher Multiplizierer vorgesehen ist, dem das Phasensignal und das Betragsstellsignal zugeführt werden und der das Kompensationssignal abgibt.

Im folgenden werden Ausführungsbeispiele der Erfindung anhand der Figuren 1 bis 3 beschrieben. Es zeigen :

Figur 1 ein Blockschaltbild einer Station zur Übertragung von Daten mit einem modulierten Träger, wobei eine Realkomponente bzw. eine Imaginärkomponente eines Kompensationssignals erzeugt wird,

Figur 2 ein Blockschaltbild einer Station zur Übertragung von Daten mit Hilfe eines modulierten Trägers, wobei eine Betragskomponente bzw. Phasenwinkelkomponente des Kompensationssignals zur Unterdrückung des Übersprechsignals benutzt wird,

Figur 3 ein Blockschaltbild zur Erläuterung der gleichzeitigen Übertragung eines Sprachsignals und eines Datensignals oder zur gleichzeitigen Übertragung zweier Datensignale.

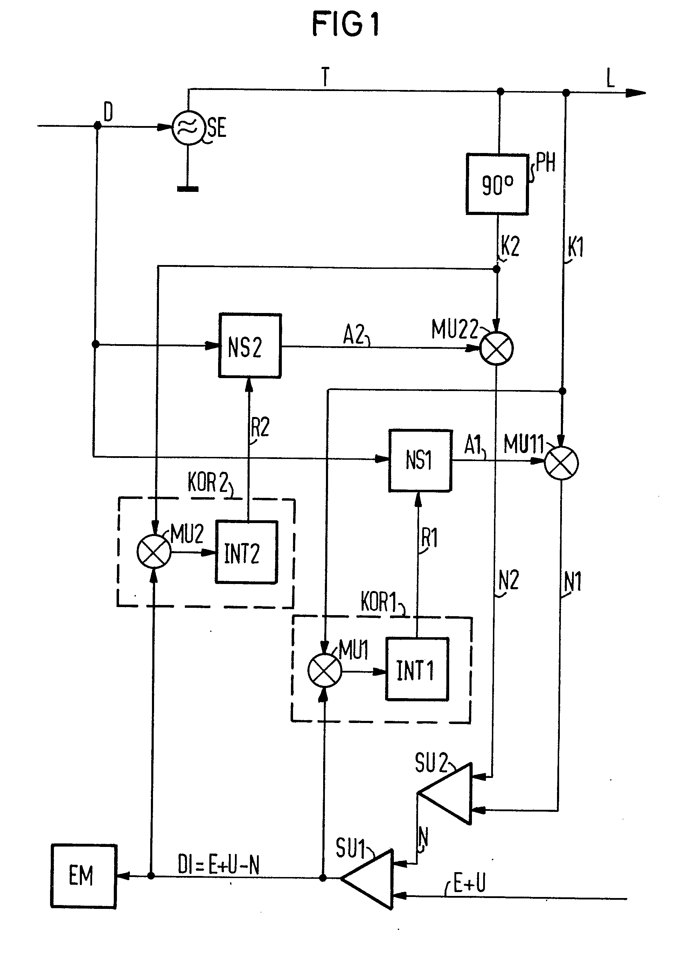

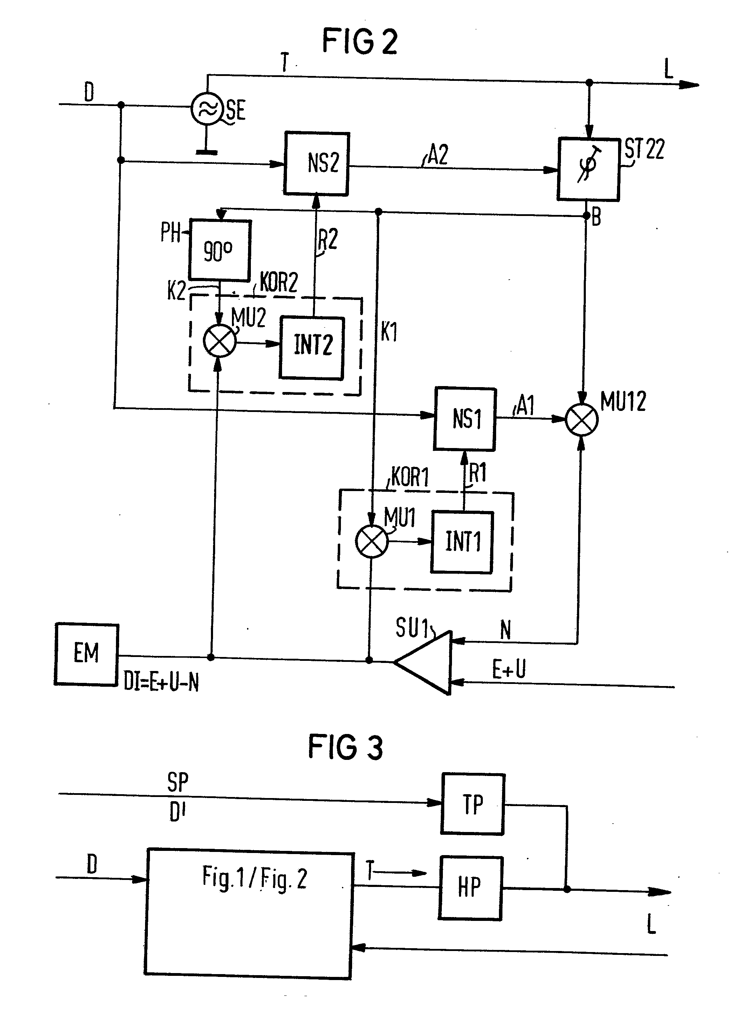

Fig. 1 zeigt eine Station, von der aus die Daten D über die Zweidrahtleitung L zu einer nicht dargestellten, aber gleichartig aufgebauten, entfernten Station übertragen werden sollen. Umgekehrt sollen von dieser entfernten Station auch Daten zu der in Fig. 1 dargestellten Station übertragen werden. Wenn über eine Zweidrahtleitung Daten in beiden Richtungen gleichzeitig übertragen werden sollen, dann muß bekanntlich verhindert werden, daß sich das vom Sender SE abgegebene Signal im Empfänger EM der eigenen Station störend auswirkt. Falls über eine Zweidrahtleitung ein Basisbandsignal übertragen wird, dann wird mit Hilfe einer Nachbildungsstufe ein Kompensationssignal erzeugt, mit Hilfe dessen jenes Übersprechsignal unterdrückt wird, das von den Signalen des eigenen Senders SE herrührt.

Gemäß Fig. 1 wird nicht ein Basisbandsignal über die Zweidrahtleitung L übertragen, sondern mit Hilfe des Senders SE wird in Abhängigkeit von den Daten D ein modulierter Träger T erzeugt, und über die Zweidrahtleitung L übertragen. Der modulierte Träger T verursacht ebenfalls ein Übersprechsignal U, das dem Empfangssignal E überlagert ist und das unterdrückt werden muß, um im Empfänger EM der eigenen Station nicht zu stören. Zur Unterdrückung dieses Übersprechsignals wird das Kompensationssignal N erzeugt, das aus den beiden Komponenten N1 und N2 gebildet wird und mit Hilfe dessen unter Verwendung des Summierers SU1 ein Differenzsignal DI gewonnen wird, das dem Empfänger EM zugeführt wird.

Zur Gewinnung des Kompensationssignals wird der modulierte Träger T in zwei orthogonale Signalkomponenten K1 bzw. K2 zerlegt, deren Phasenwinkel sich um 90° unterscheiden. Bei vorliegendem Ausführungsbeispiel gleicht die eine orthogonale Signalkomponente K1 dem modulierten Träger, wogegen die andere orthogonale Signalkomponente K2 mit Hilfe des Phasendrehgliedes PH gewonnen wird, das eine Phasendrehung um 90° bewirkt. Die Komponente K1 stellt den Realteil des modulierten Trägers T dar, die Komponente K2 den Imaginärteil dieses modulierten Trägers. Mit Hilfe der Korrelationsstufen KOR1 bzw. KOR2 wird durch Korrelation des Differenzsignals DI mit den beiden orthogonalen Signalkomponenten K1 bzw. K2 ein erstes bzw. zweites Regelsignal R1 bzw. R2 erzeugt, welches die Abweichung der einen orthogonalen Signalkomponente K1 von einer entsprechenden ersten Signalkomponente U1 des Übersprechsignals U bzw. die Abweichung der zweiten orthogonalen Signalkomponente K2 von einer entsprechenden zweiten Signalkomponente U2 des Übersprechsignals U signalisiert.

Mit den beiden Regelsignalen R1 bzw. R2 wird je eine Nachbildungsstufe NS1 bzw. NS2 gesteuert. Derartige Nachbildungsstufen sind im Zusammenhang mit der Übertragung von Basisbandsignalen über Zweidrahtleitungen bekannt. Bekannten Nachbildungsstufen wird nach bekannten Verfahren ein Basisbandsignal zugeführt und in Abhängigkeit vom Übersprechsignal wird ein Regelsignal abgeleitet und auf diese Weise werden Störungen eines gesendeten Basisbandsignals im eigenen Empfänger verhindert. Beispielsweise ist in der Zeitschrift « The Bell System Technical Journal », März 1971, Seite 789, Fig. 2 eine bekannte Nachbildungsstufe innerhalb eines gestrichelten Blocks dargestellt. Die in Fig. 1 dargestellten Nachbildungsstufen NS1 und NS2 gleichen im Prinzip bekannten Nachbildungsstufen. Die von ihnen abgegebenen Signale A1 bzw.

A2 unterscheiden sich aber von den Ausgangssignalen bekannter Nachbildungsstufen, weil den in Fig. 1 dargestellten Nachbildungsstufen andere Regelsignale R1 bzw. R2 zugeführt werden.

Durch multiplikative Mischung des ersten Nachbildungssignals A1 und der Signalkomponente K1 wird mit Hilfe des Multiplizierers MU11 das multiplikative Signal N1 gewonnen. Durch multiplikative Mischung des zweiten Nachbildungssignals A2 und der zweiten Komponente K2 wird mit Hilfe des Multiplizierers MU22 das multiplikative Signal N2 gewonnen. Mit Hilfe des Summierers SU2 werden die beiden multiplikativen Signale N1 und N2 vereinigt und das Kompensationssignal N gewonnen.

Der Summierer SU1 erhält einerseits das von der entfernten Station stammende Empfangssignal E mit dem überlagerten Übersprechsignal U und erhält andererseits das Kompensationssignal N. Das Differenzsignal DI gleicht dem Empfangssignal E mit dem Übersprechsignal U abzüglich des Kompensationssignals N.

Die Korrelatoren KOR1 bzw. KOR2 bestehen aus je einem Multiplizierer MU1 bzw. MU2 und aus je einem Integrator INT1 bzw. INT2. Diese Integratoren erfüllen einerseits die Aufgabe, bei der Bildung der Regelsignale R1 und R2 Produkte orthogonaler Signalkomponenten zu beseitigen. Dazu genügt mindestens eine Integration über eine Periode, da die über eine Periode der orthogonalen Signalkomponenten summierten Produkte dieser orthogonalen Signalkomponenten gleich Null sind.

Fig. 2 zeigt eine Station, von der aus die Daten D zu einer nicht dargestellten, entfernten Station übertragen werden. Von der entfernten Station erhält der in Fig. 2 dargestellte Summierer SU1 wie im Fall der Fig. 1, ein Gemisch aus dem Empfangssignal E und dem Übersprechsignal U. Zur Unterdrükkung des Übersprechsignals U wird das Kompensationssignal N abgeleitet und es wird das Differenzsignal DI aus dem Empfangssignal E und dem Übersprechsignal U abzüglich dem Kompensationssignal N gebildet. Die der Fig. 2 zugrundeliegenden Voraussetzungen gleichen somit den anhand der Fig. 1 beschriebenen Voraussetzungen.

Zur Gewinnung des Kompensationssignals N wird zunächst der modulierte Träger T der Phasenregelstufe ST22 zugeführt, die in Abhängigkeit vom Phasenstellsignal A2 eine Phasendrehung des modulierten Trägers bewirkt. Auf diese Weise ergibt sich am Ausgang der Phasenregelstufe ST22 das Phasensignal B. Aus diesem Phasensignal B werden zwei orthogonale Signalkomponenten K1 bzw. K2 erzeugt, deren Phasenwinkel sich um 90° unterscheiden. Bei vorliegendem Ausführungsbeispiel gleicht das Phasensignal B der Signalkomponente K1, wogegen sich das Phasensignal B und die Signalkomponente K2 um einen Phasenwinkel von 90° unterscheiden. Diese Phasendrehung wird mit Hilfe des Phasendrehgliedes PH durchgeführt. Die beiden Signalkomponenten K1 und K2 sind insofern orthogonal zueinander, als die über eine Periode dieser Signalkomponenten summierten Produkte gleich Null sind.

Durch Korrelation des Differenzsignals DI mit den beiden orthogonalen Signalkomponenten K1 bzw. K2 wird mit Hilfe der Korrelatoren KOR1 bzw. KOR2 ein dem Betrag zugeordnetes Betrags-Regelsignal R1 bzw. ein der Phase zugeordnetes Phasen-Regelsignal R2 erzeugt. Dabei signalisiert das Betrags-Regelsignal R1 die Abweichung der einen Signalkomponente K1 vom Betrag des Übersprechsignals U. Das Phasen-Regelsignal R2 signalisiert die Abweichung der anderen Signalkomponente K2 vom Phasenwinkel des Übersprechsignals U. Mit dem Betrags-Regelsignal R1 bzw. mit dem Phasen-Regelsignal R2 und mit den Daten wird ein Betragsstellsignal A1 bzw. ein Phasenstellsignal A2 gewonnen. Das Betragsstellsignal A1 signalisiert den Betrag des Kompensationssignals N. Das Phasenstellsignal A2 signalisiert die Phase des Kompensationssignals N. Die Nachbildungsstufen NS1 und NS2 sind an sich bekannt und es gelten diesbezüglich die gleichen Ausführungen, die bereits anhand der Fig. 1 gemacht wurden.

Die Phase des Phasensignals B ist abhängig einerseits von der Phase des modulierten Trägers und andererseits vom Phasenstellsignal A2. Das Betragsstellsignal A1 und das Phasensignal B werden mit Hilfe des Multiplizierers MU12 in multiplikativer Weise gemischt, so daß sich das Kompensationssignal N ergibt. Die Korrelatoren KOR1 bzw. KOR2 bestehen, wie im Fall der Fig. 1, aus den Multiplizierern MU1 bzw. MU2 und aus den Integratoren INT1 bzw. INT2. Die hinsichtlich der Integrationsdauer in Zusammenhang mit der Fig. 1 gemachten Ausführungen gelten auch für die in Fig. 2 dargestellten Integratoren.

Fig. 3 zeigt die gleichzeitige Übertragung eines Sprachsignals und der Daten über eine Zweidrahtleitung L. Im dargestellten Kästchen ist entweder die in Fig. 1 oder die in Fig. 2 dargestellte Schaltungsanordnung zu denken. Diesen Schaltungsanordnungen werden also wie gemäß Fig. 1 und 2 die Daten D zugeführt. Am Ausgang der Schaltungsanordnung ist der Hochpaß HP vorgesehen. Falls zusätzlich zu den Daten D auch das Sprachsignal SP übertragen werden soll, dann wird dies über den Tiefpaß TP der Zweidrahtleitung L zugeführt. Die Grenzfrequenzen des Tiefpasses TP und des Hochpasses HP sind derart festgelegt, daß für den modulierten Träger T einerseits und für das Sprachsignal SP andererseits zwei sich nicht überlappende Frequenzbänder vorgesehen werden.

Wahlweise können außer den Daten D weitere Daten D' in Form eines Basisbanddatensignals übertragen werden. Auch in diesem Fall wird der modulierte Träger T über den Hochpaß HP zugeführt und die weiteren Daten D' werden über den Tiefpaß TP in verschiedenen Frequenzbändern über die Zweidrahtleitung L übertragen.

**Ansprüche**

1. Verfahren zur Unterdrückung eines Übersprechsignals bei der Übertragung von Daten (D) über eine Zweidraht-Leitung (L) von einer eigenen Station zu einer entfernten Station und umgekehrt, wobei die Daten (D) der eigenen Station das Übersprechsignal (U) bewirken, das sich dem von der entfernten Station gesendeten Signal überlagert und im Empfangssignal (E) auftritt, wobei im Bereich der eigenen Station ein Kompensationssignal (N) erzeugt wird und wobei ein Differenzsignal (DI) gewonnen wird, das vom Empfangssignal (E), vom Übersprechsignal (U) und vom Kompensationssignal (N) abhängt, dadurch gekennzeichnet, daß die Daten (D) mit einem modulierten Träger (T) übertragen werden, daß der modulierte Träger (T) in zwei orthogonale Signalkomponenten (K1, K2) zerlegt wird, deren Phasenwinkel sich um 90° unterscheiden, daß durch Korrelation des Differenzsignals (DI) mit den beiden orthogonalen Signalkomponenten (K1 bzw. K2) ein erstes bzw. zweites Regelsignal (R1 bzw. R2) erzeugt wird, welches die Abweichung der einen orthogonalen Signalkomponente (K1) von einer entsprechenden ersten Signalkomponente (U1) des Übersprechsignals (U) bzw. die Abweichung der zweiten orthogonalen Signalkomponente (K2) von einer entsprechenden zweiten Signalkomponente (U2) des Übersprechsignals (U) signalisiert, daß ein erstes bzw. zweites Nachbildungssignal (A1 bzw. A2) erzeugt wird, das vom ersten bzw. zweiten Regelsignal (R1 bzw. R2) und von den Daten (D) abhängig ist, daß durch multiplikative Mischung des ersten Nachbildungssignals (A) und der einen orthogonalen Signalkomponente (K1) bzw. durch multiplikative Mischung des zweiten Nachbildungssignals (A2) und der anderen orthogonalen Signalkomponente (K2) multiplikative Signale (N1 bzw. N2) gewonnen werden, und daß das aus bei den multiplikativen Signalen (N1 und N2) gebildete Summensignal als Kompensationssignal (N) zur Unterdrückung der Übersprechsignals (U) benutzt wird (Fig. 1).

2. Verfahren zur Unterdrückung eines Übersprechsignals bei der Übertragung von Daten über eine Zweidrahtleitung (L) von einer eigenen Station zu einer entfernten Station und umgekehrt, wobei die Daten (D) der eigenen Station das Übersprechsignal (U) bewirken, das sich dem von der entfernten Station gesendeten Signal überlagert und im Empfangssignal (E) auftritt, wobei im Bereich der eigenen Station ein Kompensationssignal (N) erzeugt wird und wobei ein Differenzsignal (DI) gewonnen wird, das vom Empfangssignal (E), vom Übersprechsignal (U) und vom Kompensationssignal (N) abhängt, dadurch gekennzeichnet, daß die Daten (D) mit einem modulierten Träger (T) übertragen werden, daß zwei vom modulierten Träger (T) abhängige und zueinander orthogonale Signalkomponenten (K1, K2) erzeugt werden, daß durch Korrelation des Differenzsignals (DI) mit den beiden orthogonalen Signalkomponenten (K1 bzw. K2) ein dem Betrag zugeordnetes Betrags-Regelsignal (R1) bzw. ein der Phase zugeordnetes Phasen-Regelsignal (R2) erzeugt wird, das die Abweichung der einen orthogonalen Signalkomponente (K1) vom Betrag des Übersprechsignals (U) bzw. die Abweichung der anderen orthogonalen Signalkomponente (K2) vom Phasenwinkel des Übersprechsignals (U) signalisiert, daß mit dem Betrags-Regelsignal (R1) bzw. mit dem Phasen-Regelsignal (R2) und mit den Daten (D) ein Betragsstellsignal (A1) bzw. ein Phasenstellsignal (A2) gewonnen wird, das den Betrag des Kompensationssignals (N) bzw. die Phase des Kompensationssignals (N) signalisiert, daß mit Hilfe des modulierten Trägers (T) und mit Hilfe des Phasenstellsignals (A2) ein Phasensignal (B) gewonnen wird, dessen Phase sowohl vom modulierten Träger (T) als auch vom Phasenstellsignal (A2) abhängt und daß mit Hilfe des Phasensignals (B) und mit Hilfe des Betragsstellsignals (A1) das Kompensationssignal (N) erzeugt wird (Fig. 2).

3. Verfahren nach Anspruch 1 oder 2, dadurch gekennzeichnet, daß zusätzlich zu den Daten (D) ein Sprachsignal (SP) oder ein weiteres Basisbanddatensignal (D') über die Zweidrahtleitung übertragen wird, wobei für das Sprachsignal bzw. für das weitere Basisband-Datensignal einerseits und für den modulierten Träger (T) andererseits zwei sich nicht überlappende Frequenzbänder vorgesehen sind (Fig. 3).

4. Verfahren nach Anspruch 1, dadurch gekennzeichnet, daß die eine orthogonale Signalkomponente (K1) gleich dem modulierten Träger (T) ist und die andere Orthogonalsignalkomponente (K2) sich um einen Phasenwinkel von 90° vom modulierten Träger (T) unterscheidet (Fig. 1).

5. Verfahren nach Anspruch 1, dadurch gekennzeichnet, daß die Korrelation des Differenzsignals (DI) mit den zwei orthogonalen Signalkomponenten (K1 bzw. K2) durch multiplikative Mischung des Differenzsignals und der einen orthogonalen Signalkomponente (K1) bzw. durch multiplikative Mischung des Differenzsignals und der anderen orthogonalen Signalkomponente (K2) andererseits und anschließender Integration bewirkt wird (Fig. 1).

6. Schaltungsanordnung zur Durchführung des Verfahrens nach Anspruch 1, dadurch gekennzeichnet, daß zwei Multiplizierer (MU11, MU22) vorgesehen sind, daß der eine Multiplizierer (MU11) mit seinem Eingang direkt und der andere Multiplizierer (MU22) mit seinem einen Eingang über einen 90°-Phasenschieber an einer den mit den Daten (D) modulierten Träger (T) übertragenden Leitung (L) angeschlossen sind, daß die beiden Multiplizierer (MU11, MU22) mit weiteren Eingängen an den Ausgängen von Nachbildungsstufen (NS1, NS2) angeschlossen sind, die eingangsseitig die Daten und Regelsignale (R1, R2) zugeführt erhalten, welche aus dem mit den Daten modulierten Träger (K1) bzw. aus dem um 90° phasenversetzten, mit Daten modulierten Träger (K2) und aus einem Differenzsignal (DI) abgeleitet ist, welches von einem Summierer (SU1) abnehmbar ist, der an seinem einen Eingang ein aus einem Empfangssignal (E) und einem Übersprechsignal (U) zusammengesetztes Signal zugeführt erhält und der an seinem anderen Eingang ein subtraktiv zu verarbeitendes Kompensationssignal (N) vom Ausgang eines weiteren Summierers (SU2) zugeführt erhält, und daß der genannte weitere Summierer (SU2) mit seinen Eingängen an den Ausgängen der genannten Multiplizierer (MU11, MU22) angeschlossen ist.

7. Verfahren nach Anspruch 2, dadurch gekennzeichnet, daß das Phasensignal (B) als eine der beiden orthogonalen Signalkomponenten (K1) verwendet wird und daß durch Phasendrehung um 90° aus dem Phasensignal (B) die andere der beiden orthogonalen Signalkomponenten (K2) gewonnen wird (Fig. 2).

8. Verfahren nach Anspruch 2, dadurch gekennzeichnet, daß die Korrelation des Differenzsignals (DI) mit den zwei orthogonalen Signalkomponenten (K1 bzw. K2) durch multiplikative Mischung des Differenzsignals und der einen orthogonalen Signalkomponente (K1) bzw. durch multiplikative Mischung des Differenzsignals und der anderen orthogonalen Signalkomponente (K2) andererseits und anschließender Integration bewirkt wird (Fig. 2).

9. Schaltungsanordnung zur Durchführung des Verfahrens nach Anspruch 2, dadurch gekennzeichnet, daß an der Leitung (L), auf der der durch die Daten (D) modulierte Träger (T) auftritt, eine Phasenregelstufe (ST22) mit ihrem Eingang angeschlossen ist, daß am Ausgang der Phasenregelstufe (ST22) ein Multiplizierer (MU12) mit einem Eingang angeschlossen ist, daß der Multiplizierer (MU12) mit einem weiteren Eingang und die Phasenregelstufe (ST22) mit einem Steuereingang am Ausgang jeweils einer Nachbildungsstufe (NS1 ; NS2) angeschlossen ist, von der ein Betragsstellsignal (A1) bzw. ein Phaseneinstellsignal (A2) abgebbar ist, daß die Nachbildungsstufen (NS1, NS2) an ihren einen Eingängen die Daten (D) direkt zugeführt erhalten und mit ihren anderen Eingängen an Ausgängen von Korrelatoren (KOR1 bzw. KOR2) angeschlossen sind, welche mit ihren einen Eingängen am Ausgang der Phasenregelstufe (ST22) und mit ihren anderen Eingängen am Ausgang eines Summierers (SU1) angeschlossen sind, und daß der Summierer (SU1) an seinem einen Eingang ein aus dem Empfangssignal (E) und dem Übersprechsignal (U) sich zusammensetzendes Signal zugeführt erhält und mit seinem für die Aufnahme eines subtraktiv zu verarbeitenden Nachbildungssignals (N) dienenden Eingang am Ausgang des Multiplizierers (MU12) angeschlossen ist.

10. Schaltungsanordnung nach Anspruch 6 oder 9, dadurch gekennzeichnet, daß in der den datenmodulierten Träger (T) übertragenden Zweidrahtleitung (L) ein Hochpaß (HP) eingefügt ist und daß mit der betreffenden Zweidrahtleitung (L) außerdem eine ein Sprachsignal (SP) oder weitere Daten (D') in Form von Basisbandsignalen übertragende Leitung über ein Tiefpaß (TP) verbunden ist.

**Claims**

1. Process for suppressing a cross-talk signal in the transmission of data (D) via a two-wire line (L) from one's own station to a remote station and vice versa, where the data (D) of one's own station produce the cross-talk signal (U) which is superimposed upon the signal transmitted from the remote station and occurs in the receiving signal (E), where a compensation signal (N) is generated in the region of one's own station and where a difference signal (DI) is obtained which is dependent upon the received signal (E), upon the cross-talk signal (U), and upon the compensation signal (M), characterised in that the items of data (D) are transmitted with a modulated carrier (T), that the modulated carrier (T) is split into two orthogonal signal components (K1, K2) whose phase angles differ by 90°, that as a result of correlation of the difference signal (DI) with the two orthogonal signal components (K1, K2) a first and a second regulating signal (R1, R2) are produced which respectively signal the deviation of the first orthogonal signal component (K1) from a corresponding first signal component (U1) of the cross-talk signal (U) and the deviation of the second orthogonal signal component (K2) from a corresponding second signal component (U2) of the cross-talk signal (U), that a first and a second dummy signal (A1, A2) are produced which are dependent upon the first and second regulating signals (R1, R2) respectively and upon the items of data (D), that by multiplicative mixing of the first dummy signal (A1) and the first orthogonal signal component (K1) and by multiplicative mixing of the second dummy signal (A2) and the other orthogonal signal component (K2) respective multiplicative signals (N1, N2) are obtained, and that the sum signal formed from the two multiplicative signals (N1, N2) is used as compensation signal (N) to suppress the cross-talk signal (U) (Fig. 1).

2. Process for suppressing a cross-talk signal in the transmission of data across a two-wire line (L) from one's own station to a remote station and vice versa, where the data (D) of one's own station produce the cross-talk signal (U) which is superimposed upon the signal transmitted from the remote station and occurs in the received signal (E), where a compensation signal (N) is produced in the region of one's own station and where a difference signal (DI) is obtained which is dependent upon the received signal (E), upon the cross-talk signal (U), and upon compensation signal (N), characterised in that the items of data (D) are transmitted with a modulated carrier (T), that two signal components (K1, K2) are generated which are dependent upon the modulated carrier (T) and are orthogonal to one another, that by correlation of the difference signal (DI) with the two orthogonal signal components (K1 and K2) in the one case a value regulating signal (R1) assigned to the value is generated and in the other case a phase regulating signal (R2) assigned to the phase is generated, which signal the deviation of the first orthogonal signal component (K1) from the value of the cross-talk signal (U) in the one case and the deviation of the other orthogonal signal component (K2) from the phase angle of the cross-talk signal (U) in the other case, that by means of the value regulating signal (R1) on the one hand and the phase regulating signal (R2) on the other hand, and also by means of the data (D) a value control signal (A1) and a phase control signal (A2) are obtained which signal the value of the compensation signal (N) on the one hand and the phase of the compensation signal (N) on the other hand, that with the aid of the modulated carrier (T) and with the aid of the phase control signal (A2) a phase signal (B) is obtained whose phase is dependent both upon the modulated carrier (T) and upon the phase control signal (A2), and that the compensation signal (N) is produced with the aid of the phase signal (B) and with the aid of the value control signal (A1) (Fig. 2).

3. Process as claimed in claim 1 or 2, characterised in that in addition to the data items (D), a speech signal (SP) or a further base band data signal (D') is transmitted via the two-wire line, where two non-overlapping frequency bands are provided for the speech signal and the further base band data signal on the one hand and for the modulated carrier (T) on the other hand (Fig. 3).

4. Process as claimed in claim 1, characterised in that the first orthogonal signal component (K1) is identical to the modulated carrier (T) and the other orthogonal signal component (K2) differs from the modulated carrier (T) by a phase angle of 90° (Fig. 1).

5. Process as claimed in claim 1, characterised in that the correlation of the difference signal (DI) with the two orthogonal signal components (K1 and K2) is achieved by multiplicative mixing of the difference signal and the first orthogonal signal component (K1) in the first case and by multiplicative mixing of the difference signal and the other orthogonal signal component (K2) in the other case and by subsequent integration (Fig. 1).

6. Circuit arrangement for the implementation of the process claimed in claim 1, characterised in that two multipliers (MU11, MU22), are provided, that the first multiplier (MU11) is connected directly by its input to a line (L) which transmits the carrier (T) modulated with the data (D), whereas the data (D), whereas the other multiplier (MU22) is connected thereto by its first input via a 90° phase shift device, that the two multipliers (MU11, MU22) are connected by further inputs to the outputs of dummy stages (NS1, NS2) which are supplied at their inputs with data items and with regulating signals (RU1, RU2) which are derived from the carrier (K1) modulated with the data items and from the carrier (K2) which is offset in phase by 90° and is modulated with data items and from a difference signal (DI) which can be obtained from an adder (SU1) which at its first input is supplied with a signal comprising a received signal (E) and a cross-talk signal (U) and at its other input is supplied with a compensation signal (N), which is to be subtractively processed, from the output of a further adder (SU2), and that the aforementioned further adder (SU2) is connected by its inputs to the outputs of the aforementioned multipliers (MU11, MU22).

7. Process as claimed in claim 2, characterised in that the phase signal (B) is used as one of the two orthogonal signal components (K1) and that the other of the two orthogonal signal components (K2) is obtained from the phase signal (B) by a phase rotation of 90° (Fig. 2).

8. Process as claimed in claim 2, characterised in that the correlation of the difference signal (DI) with the two orthogonal signal components (K1 and K2) is effected by multiplicative mixing of the difference signal and of the first orthogonal signal component (K1) on the one hand and by multiplicative mixing of the difference signal and the other orthogonal signal component (K2) on the other hand, and by subsequent integration (Fig. 2).

9. Circuit arrangement for the implementation of the process claimed in claim 2, characterised in that the line (L) upon which occurs the carrier (T) modulated by the data items (D) is connected to the input of a phase regulating stage (ST22), that a multiplier (MU12) is connected by its input to the output of the phase regulating stage (ST22), that the multiplier (MU12) is connected by a further input to the output of a dummy stage (NS1) whereas the phase regulating stage (ST22) is connected by a control input to the output of a dummy stage (NS2), from which dummy stages a value control signal (A1) and a phase setting signal (A2) can be emitted, that at their first inputs the dummy stages (NS1, NS2) are directly supplied with the data items (D) and at their other inputs are connected to outputs of correlators (KOR1 and KOR2) which are connected by their first inputs to the output of the phase regulating stage (ST22) and are connected by their other inputs to the output of an adder (SU1), and that at its first input the adder (SU1) is supplied with a signal comprising the received signal (E) and the cross-talk signal (U), and at its input which serves to receive a dummy signal (N) which is to be subtractively processed it is connected to the output of the multiplier (MU12).

10. Circuit arrangement as claimed in claim 6 or 9, characterised in that a high-pass filter (HP) is inserted into the two-wire line (L) which transmits the data-modulated carrier (T), and that the two-wire line (L) in question is also connected via a low-pass filter (TP) to a line which transmits a speech signal (SP) or further data items (D') in the form of base band signals.

**Revendications**

1. Procédé pour la suppression d'un signal de diaphonie lors de la transmission de données (D) sur une ligne bifilaire (L) d'un poste particulier en direction d'un poste éloigné et vice-versa, les données (D) du poste particulier provoquant le signal de diaphonie (U) qui se superpose au signal émis par le poste éloigné et apparaît dans le signal de réception (E), un signal de compensation (N) étant produit dans la région du poste particulier, et un signal de différence (DI), qui dépend du signal de réception (E), du signal de diaphonie (U) et du signal de compensation (N) étant formés, caractérisé en ce que les données (D) sont transmises avec une porteuse modulée, que la porteuse modulée (T) est décomposée en deux composantes de signal orthogonales (K1, K2) dont les angles de phase diffèrent de 90°, que, par corrélation du signal de différence (DI) et des deux composantes de signal orthogonales (K1 ou K2) on forme un premier ou un second signal de régulation (R1 ou R2) qui indique l'écart existant entre une des composantes de signal orthogonales (K1) et une première composante de signal correspondante (U1) du signal de diaphonie (U) ou l'écart existant entre la seconde composante de signal orthogonale (K2) et une seconde composante de signal correspondante (U2) du signal de diaphonie (U), qu'on forme un premier ou un second signal d'équilibrage (A1 ou A2) qui dépend du premier ou du second signal de régulation (R1 ou R2) et des données (D), que par mélange multiplicatif du premier signal d'équilibrage (A1) et d'une des composantes de signal orthogonales (K1) ou par mélange multiplicatif du second signal d'équilibrage (A2) et de l'autre composante de signal orthogonale (K2) on forme des signaux multiplicatifs (N1 ou N2), et que le signal de somme formé à partir des deux signaux multiplicatifs (N1 et N2) est utilisé comme signal de compensation (L) pour la suppression du signal de diaphonie (U) (figure 1).

2. Procédé pour la suppression d'un signal de diaphonie lors de la transmission de données sur une ligne bifilaire (L) d'un poste particulier en direction d'un poste éloigné et vice-versa, les données (D) du poste particulier provoquant le signal de diaphonie (U) qui se superpose au signal émis par le poste éloigné et apparaît dans le signal de réception (E), un signal de compensation (N) étant produit dans la région du poste particulier, et un signal de différence (DI), qui dépend du signal de réception (E), du signal de diaphonie (U) et du signal de compensation (N) étant formé, caractérisé en ce que les données (D) sont transmises avec une porteuse modulée (T), qu'on forme deux composantes de signal (K1, K2) orthogonales l'une par rapport à l'autre et dépendant de la porteuse modulée (T), que par corrélation du signal de différence (DI) et des deux composantes de signal orthogonales (K1 ou K2) on forme un signal de régulation d'amplitude (R1) associé à l'amplitude ou un signal de régulation de phase (R2) associé à la phase, qui indique l'écart entre une des composantes de signal orthogonales (K1) et l'amplitude du signal de diaphonie (U) ou l'écart entre l'autre composante de signal orthogonale (K2) et l'angle de phase du signal de diaphonie (U), qu'on forme avec le signal de régulation d'amplitude (R1) ou le signal de régulation de phase (R2) et avec les données (D) un signal de réglage d'amplitude (A1) ou un signal de réglage de phase (A2) qui indique l'amplitude du signal de compensation (N) ou la phase du signal de compensation (N), qu'on forme, à l'aide de la porteuse modulée (T) et à l'aide du signal de réglage de phase (A2), un signal de phase (B) dont la phase dépend aussi bien de la porteuse modulée (T) que du signal de réglage de phase (A2), et qu'on forme le signal de compensation (N) à l'aide du signal de phase (B) et à l'aide du signal de réglage d'amplitude (A1) (figure 2).

3. Procédé suivant l'une des revendications 1 ou 2, caractérisé en ce que, en plus des données (D), par l'intermédiaire de la ligne bifilaire, est transmis un signal vocal (SP) ou un autre signal de données de bande de base (D'), deux bandes de fréquences ne se recouvrant pas étant prévues pour le signal vocal ou pour l'autre signal de données de bandes de base d'une part et pour la porteuse modulée (T) d'autre part (figure 3).

4. Procédé suivant la revendication 1, caractérisé en ce qu'une des composantes de signal orthogonales (K1) est identique à la porteuse modulée (T) et que l'autre composante de signal orthogonale (K2) diffère de la porteuse modulée (T) d'un angle de phase de 90° (figure 1).

5. Procédé suivant la revendication 1, caractérisé en ce que la corrélation du signal de différence (DI) et des deux composantes de signal orthogonales (K1 ou K2) est effectuée par mélange multiplicatif du signal de différence et de l'une des composantes de signal orthogonales (K1) ou par mélange multiplicatif du signal de différence et de l'autre composante de signal orthogonale (K2) d'autre part puis intégration (figure 1).

6. Circuit pour la mise en œuvre du procédé suivant la revendication 1, caractérisé en ce que sont prévus deux multiplicateurs (MU11, MU22), qu'une entrée d'un des multiplicateurs (MU11) est reliée directement à la ligne (L) transmettant la porteuse (T) modulée par les données (D), et une entrée de l'autre multiplicateur (MU22) est reliée à la ligne (L) transmettant la porteuse (T) modulée par les données (D) par l'intermédiaire d'un déphaseur de 90°, que les autres entrées des deux multiplicateurs (MU11, MU22) sont reliées aux sorties d'étages d'équilibrage (NS1, NS2) qui, côté entrée, reçoivent les données et des signaux de régulation (R1, R2) qui sont dérivés de la porteuse modulée par les données (K1) ou de la porteuse modulée par les données déphasée de 90° (K2) et d'un signal de différence (DI) qui peut être prélevé sur un circuit de sommation (SU1) qui reçoit sur une entrée un signal composé d'un signal de réception (E) et d'un signal de diaphonie (U), et qui reçoit sur son autre entrée un signal de compensation (N) devant être traité de façon soustractive et provenant de la sortie d'un autre circuit de sommation (SU2), et que les entrées dudit autre circuit de sommation (SU2) sont reliées aux sorties desdits multiplicateurs (MU11, MU22).

7. Procédé suivant la revendication 2, caractérisé en ce que le signal de phase (B) est utilisé comme une des deux composantes de signal orthogonales (K1) et que l'autre des deux composantes de signal orthogonales (K2) est formée à partir du signal de phase (B) par rotation de phase de 90° (figure 2).

8. Procédé suivant la revendication 2, caractérisé en ce que la corrélation du signal de différence (DI) et des deux composantes de signal orthogonales (K1 ou K2) est effectuée par mélange multiplicatif du signal de différence et de l'une des composantes de signal orthogonales (K1) ou par mélange multiplicatif du signal de différence et de l'autre composante de signal orthogonale (K2) d'autre part puis intégration (figure 2).

9. Circuit pour la mise en œuvre du procédé suivant la revendication 2 caractérisé en ce qu'à la ligne (L) sur laquelle apparaît la porteuse (T) modulée par les données (D), est reliée l'entrée d'un étage de modulation de phase (ST22), qu'à la sortie de l'étage de régulation de phase (ST22) est reliée l'entrée d'un multiplicateur (MU12), que l'autre entrée du multiplicateur (MU12) et l'entrée de commande de l'étage de régulation de phase (ST22) sont respectivement reliées à la sortie d'un étage d'équilibrage (NS1 ; NS2) à partir duquel peut être délivré un signal de réglage d'amplitude (A1) ou un signal de réglage de phase (A2), qu'une des entrées des étages d'équilibrage (NS1, NS2) reçoit directement les données (D) et que leurs autres entrées sont reliées aux sorties des corrélateurs (KOR1 ou KOR2) dont une entrée est reliée à la sortie de l'étage de régulation de phase (ST22) et dont l'autre entrée est reliée à la sortie d'un circuit de sommation (SU1), et que le circuit de sommation (SU1) reçoit sur une entrée un signal se composant du signal de réception (E) et du signal de diaphonie (U) et que son entrée servant à la réception d'un signal d'équilibrage (N) à traiter de façon soustractive est reliée à la sortie du multiplicateur (MU12).

10. Circuit suivant l'une des revendications 6 ou 9, caractérisé en ce qu'un filtre passe-haut (HP) est monté dans la ligne bifilaire (L) transmettant la porteuse modulée par les données, et qu'à la ligne bifilaire concernée (L) est reliée en outre, par l'intermédiaire d'un filtre passe-bas (TP), une ligne transmettant un signal vocal (SP) ou d'autres données (D') sous forme de signaux de bandes de base.

# FIG 1

# FIG 2

# FIG 3